Europäisches Patentamt

European Patent Office

Office européen des brevets

(11) Publication number: 0 402 956
A1

## EUROPEAN PATENT APPLICATION

(21) Application number: 90113803.2

(22) Date of filing: 27.04.87

(51) Int. Cl.⁵: F16H 3/08, F16D 13/64,
F16D 13/52, F16D 25/08

(30) Priority: 25.04.86 GB 8610184

(43) Date of publication of application:
19.12.90 Bulletin 90/51

(60) Publication number of the earlier application in
accordance with Art.76 EPC: 0 303 612

(84) Designated Contracting States:
AT BE CH DE FR GB IT LI LU NL SE

(71) Applicant: RICARDO GROUP PLC
Bridge Works
Shoreham-by-Sea West Sussex BN43
5FG(GB)

(72) Inventor: Windsor-Smith, Claude Peter
2 Launceston Road Tavistock
Devon PL19 8LY(GB)
Inventor: Tailby, Raymond Alfred
40 Moat Road Loughborough
Leicestershire LE11 3PN(GB)

(74) Representative: Archer, Philip Bruce et al
Urquhart-Dykes & Lord, Trinity Court, Trinity
Street, Priestgate
Peterborough, Cambridgeshire PE1 1DA(GB)

(54) Friction devices.

(57) A liquid cooled clutch (48) for a multi-layshaft
constant mesh change speed gear train comprises
multiple interleaved annular clutch elements (74, 78)
axially slidably coupled by drive dogs at their inner
and outer peripheries in the usual way. Sandwiched
between the clutch elements are a series of floating
elements (82) not drivably coupled to either the inner
or outer clutch elements but located axially between
them and freely rotatable. The elements (82) are of
similar construction to that of the clutch elements.
Their presence serves to avoid the well known prob-
lem of stick-slip. Actuation of the clutch elements is
by non-rotatable pistons (84) acting through ball
races (86) whereby the pistons need not rotate with
the clutch elements.

FIG.1

# FRICTION DEVICES

This invention relates to friction devices. An an example of the application of the invention is to multi-interleaved plate-type clutch mechanisms for single and multi-layshaft (two or more layshafts) constant mesh change speed gear trains. Certain aspects of the matter disclosed herein may be applicable to friction mechanisms for use in other applications including both clutch and brake mechanisms.

In the case of multi-plate interleaved clutch mechanisms for use in single and multi-layshaft constant mesh change speed gear trains, several problems arise. Firstly, there is the problem of the requirement for smooth operation, particularly with regard to take up of drive from rest. Depending on the variables of the transmission concerned, including its geometry and layout, vibrations and judder are found to arise which are not readily controlled by conventional means, and there is need for an improved means for reducing the tendency for judder and/or vibration and/or general lack of smooth clutch operation to be provided.

In a preferred embodiment of the invention there is provided a friction device in the form of a multi-plate interleaved clutch assembly. The clutch assembly comprises an assembly of interleaved plates, one set having drive means at its outer periphery and the other set having drive means at its inner periphery. The plates or clutch elements are provided with means for frictional engagement. Such means comprises the provision of friction means to transmit drive by frictional engagement between successive clutch elements. Conventionally, such friction means has been provided in the form of a friction facing on one of the sets of clutch elements. In accordance with the invention there is provided, in an assembly of interleaved clutch elements of which one set of clutch elements is drivably coupled at its outer periphery and another set at its inner periphery, at least one floating clutch element which is not drivably coupled to either of the sets of clutch elements. The floating clutch element may comprise a metallic clutch plate or element faced with friction material, the clutch elements of the two drivably connected sets being plain metal plates. Alternatively, the floating clutch element may be a plain metal plate and the driven clutch elements may be friction-surfaced. The main difference between the floating clutch elements and the other clutch elements between which it is sandwiched is that it lacks drive elements and transmits drive between its neighbours by frictional engagement therewith.

In an embodiment described below, a clutch assembly incorporating the floating friction element is the take-off-from-rest clutch of a six ratio gear train and the assembly has particularly smooth operating characteristics. Another embodiment comprises a single layshaft automatic or semi-automatic transmission in which the clutch replaces the conventional synchronization assembly, thereby permitting such automatic or semi-automatic control of the gear train.

Other design requirements for multi-layshaft constant mesh gear trains include not only the need for particularly compact format where the transmission is for use in an automobile, but also the need to integrate the gear train to the total transmission assembly so that, for example, the fluid pressure required to operate the gear train (for example to effect ratio changes) is comparable to the requirements of other parts of the transmission, such as the differential lock-up mechanisms acting between left and right side wheels of the vehicle and front and rear axles thereof, where a four wheel drive is provided.

Previously proposed clutch arrangements for multi-layshaft gear trains have been based upon the concept of providing rotating clutch actuating systems for transmission of thrust to the rotating clutch elements. The provision of such rotating pistons has necessitated elaborate and costly sealing arrangements for the pistons, together with associated axial drillings in the clutch layshafts. The piston seals in such assemblies inevitably have a high leakage rate and until now this has been accepted as an inevitable feature of such systems. However, for integration into a total transmission package, such an arrangement is unacceptable and improvements in this respect are required.

In a preferred embodiment of this aspect of the invention there is provided a multi-plate clutch assembly for a multi-layshaft gear train wherein a clutch-actuating piston and cylinder assembly is arranged to transmit clutch actuating thrust to the clutch elements through rotary bearing means. The rotary bearing means comprises a race of rotary elements such as balls or rollers. The race may be mounted directly on the piston. The piston may be slidable within a cylinder formed in the housing of the gear train. The cylinder may be a bore formed in an end wall of the gear train housing. Alternatively, the cylinder may be formed in a cylinder member supported by the gear train housing intermediate the ends thereof. The latter arrangement is appropriate where the clutch means is itself located otherwise than at the end of the housing.

The invention also provides a drive transmission, for example a single layshaft gear box, comprising a clutch as defined above. The gear box of train may be provided in combination with drive output means to a front wheel drive automobile transmission. The gear train may be connected to automatic or semi-automatic control means effecting clutch control and ratio changing in accordance with sensed vehicle motion variables. Clutch engagement may be provided by means of fluid pressure control apparatus providing for progressive clutch engagement, particularly for take-off from rest, whereby an automatic vehicle transmission can be provided without the need for a torque converter or fluid coupling.

An embodiment of the invention will now be described by way of example with reference to the accompanying drawings in which:

Fig. 1 shows a section through a gear train;

Fig. 2 shows, somewhat diagrammatically, a modification of the gear train of Fig. 1; and

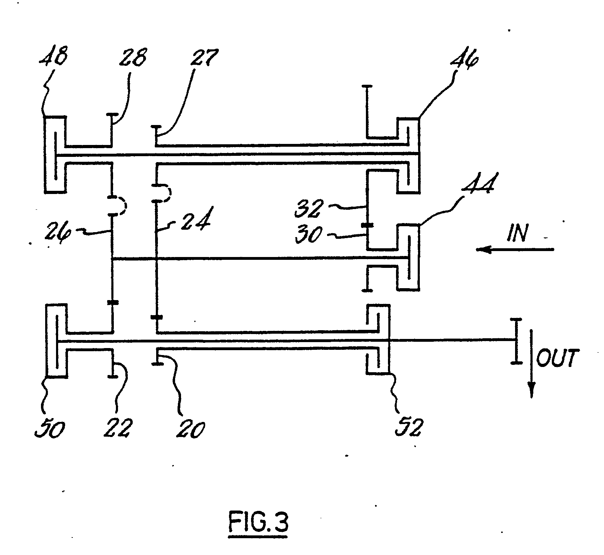

Fig. 3 is a diagram of the gear train of Fig. 1.

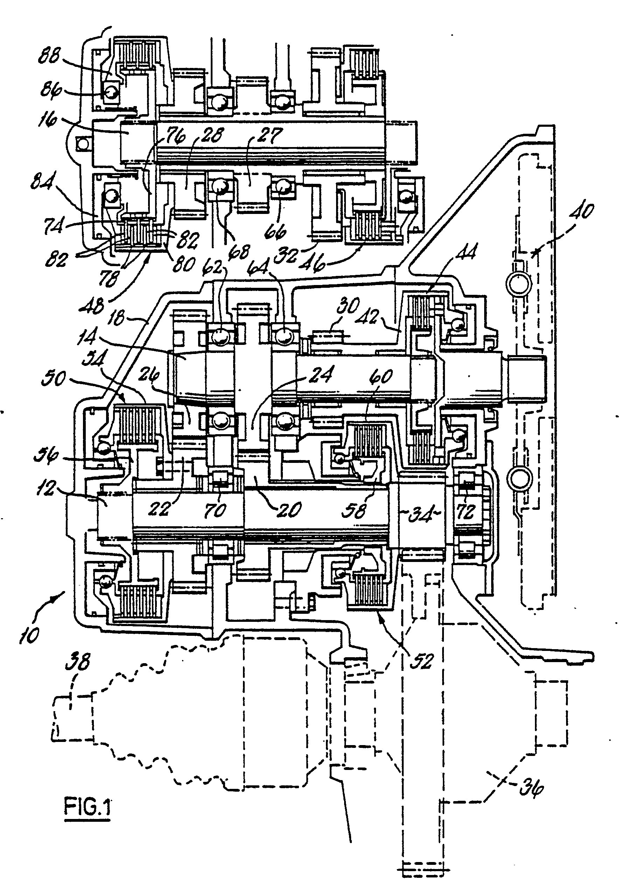

As shown in Fig. 1, a gear train 10 comprises a first layshaft 12, an input or main shaft 14 and a second layshaft 16, all mounted within a gear train housing 18. Gears 20 and 22 on layshaft 12 are in direct constant mesh with main shaft gears 24, 26 respectively. Likewise, gears 26 and 28 on layshaft 16 are in direct constant mesh with main shaft gears 24 and 26 also. In addition, a main shaft gear 30 is in direct constant mesh with a gear 32 on layshaft 16. Layshaft 12 carries an output gear 34. The latter directly drives a differential mechanism 36 from which propellor shafts 38 transmit drive in opposite directions to the front wheels of an automobile.

Drive input to main shaft 14 is through a torsionally damped mechanical input coupling 40. Drive is transmitted at all times via the housing 42 of a clutch 44 to main shaft input gear 30 and hence to layshaft input gear 32, and hence at all times to layshaft 16 itself.

Input clutch 44 provides for direct transmission of drive to the main shaft output gears 24, 26. Clutch assemblies 46, 48 on layshaft 16 provide for selective transmission of drive from the layshaft 16 to its output gears 26 and 28 respectively. Thus, drive input from coupling 40 can be transmitted direct on engagement of clutch 44, or at two higher torque ratios on selective engagement of clutches 46 and 48. Thus, input shaft 14 and layshaft 16 provide effectively three transmission ratios between the input coupling and the input shaft gears 24 and 26.

From gears 24 and 26 on the input shaft, torque can be transmitted at two selectable additional ratios to final output gear 34 by selective operation of layshaft clutches 50 and 52, whereby the gear train 10 provides six torque paths in all.

Input gear 22 of layshaft 12 is directly coupled to the housing 54 of clutch 50, of which the clutch inner member 56 is directly coupled to layshaft 12. Likewise, layshaft input gear 20 is directly coupled to the inner member 58 of clutch 52, and the latter's housing 60 is directly mounted on the layshaft 12.

Input shaft 14 is journalled on ball races 62 and 64 which are closely spaced and provide excellent support for the main shaft output gears 24 and 26. Likewise, layshaft 16 is journalled on ball races 66 and 68 which provide similar support for that shaft. Output shaft 12 is journalled on roller races 70 and 72.

Gear train 10 is extremely compact and provides a six torque path automatic transmission with direct mechanical drive input and the attendant fuel efficiency characteristics.

Attention is now directed to features of the construction of the clutch means of the gear train. Clutch 48 is employed for drive take-up from rest. It comprises an interleaved assembly of annular clutch elements. These elements comprise a first set of clutch elements 74 keyed at their inner peripheries to the clutch inner member 76 which is directly mounted on layshaft 16. A second set of clutch elements 78 are keyed at their outer peripheries to the clutch housing 18 which is directly drivably coupled to the layshaft output gear 28.

Sandwiched between the clutch elements 74 and 78 are a series of floating clutch elements 82. These latter are not drivably coupled to the inner or outer clutch members 76 and 80 but are located axially between these members and are freely rotatable. They serve to frictionally engage the clutch elements 74 and 78 and to transmit drive therebetween. The floating clutch elements 82 each comprise an annular steel plate having a friction surface on its opposite faces. Their construction is similar to that of a conventional clutch element, but without the provision of torque-transmitting drive formations at either their inner or outer peripheries.

In use, the floating clutch elements 82 are surprisingly found to reduce or eliminate vibration, judder and any stick/slip tendency of the clutch elements 74 and 78, whereby the drive take-up and gear change characteristics of the transmission are greatly improved. Similar provision may be in the other clutches of the gear train or any one or more of them according to need.

Clutch 48 is actuated by a piston 84 slidable in a bore formed in the end wall of housing 18 and acting through a ball race 86 on an annular pressure member 88, whereby compressive thrust is applied to the clutch elements for clutch engagement purposes. In this manner, piston 84 is non-rotatable and is directly supplied with fluid pressure, hydraulic or pneumatic through a suitable inlet coupling (not shown) formed in the housing 18. Similar provision is made for clutches 46, 50 and 52.

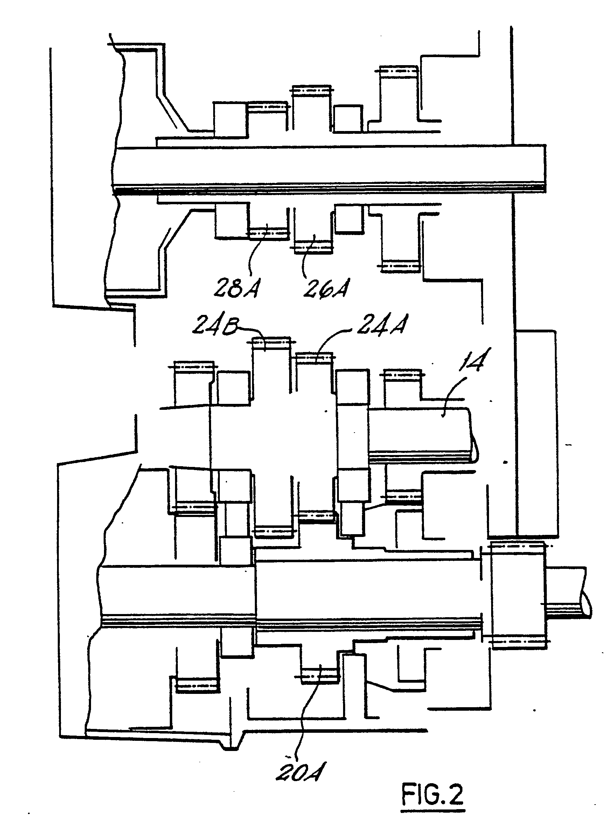

Fig 2 shows a modification of the gear train of Fig. 1. In the Fig. 1 embodiment, one of the six available transmission ratios is equal to one of the others due to the equal layshaft spacing, whereby only five different ratios are available. Therefore, in Fig. 2, in order to achieve six different transmission ratios, the gear 24 on input shaft 14 is provided in the from of a two-gear cluster 24A, 24B. Corresponding changes are provided on layshafts 12 and 16, the former having an input gear 20A meshing with gear 24A, and the latter having its gears 26A, 28A meshing with the input shaft gears 24A, 24B respectively.

The operation of this embodiment is as previously described.

The above embodiments are particularly applicable to multi-layshaft constant mesh change speed gear trains such as those of our prior applications and patents , such as EP 00 12 022 and EP 00 41 320 and EP 01 07 667 and EP 02 14 972 . We hereby incorporate the disclosure of our above-mentioned prior specifications in this application by reference.

The problems of stick-slip operation are of particular significance in relation to drive take-up from rest in an automatic transmission , such as those of our prior patent cases mentioned above, but also arise in other friction devices operating in liquid environments . A well known example of such is the multi-plate transmission brake of many agricultural tractors . Special oils have been developed to reduce this problem in such mechanisms. It is believed that the present invention may well provided a considerable improvement in performance of such braking systems.

In an embodiment which has been tested , there have been provided three outer and three inner annular clutch elements with six floating clutch elements sandwiched between them . However , it may not be essential to provide a floating element between each pair of clutch elements . Only one such floating element may be sufficient .

With regard to the clutch actuation system , the ball races disclosed above may of course be replaced by roller races . In one particularly advantageous modification , a clutch assembly has been devised which employs a needle roller race and is so compact that it can replace the synchronisation clutch assembly of a conventional single layshaft gear train, thereby permitting automatic or semi-automatic control of the gear train .

The provision of clutch-actuating pistons acting through ball or roller races or like bearing means provides the very considerable advantage that the considerable fluid loss which has in the past occurred between the rotating pistons and their cylinder assemblies is avoided , whereby a much smaller hydraulic pump can be employed , such as a remote pump feeding the gear box and a limited slip differential or the like .

The detailed disclosure of the embodiment described above is susceptible of considerable development and modification . The clutch elements themselves can be of any suitable from conventional or otherwise with any suitable driving arrangement , including of course the conventional axially slidable keys and key ways . References above to frictional engagement of the friction elements and the floating elements are intended to include not only actual physical contact but also drive transmission in the presence of a film of oil on the confronting surfaces.

## Claims

1 A drive transmission comprising a clutch having rotatable clutch elements and a piston and cylinder assembly to actuate same, rotary bearing means being provided to transmit clutch-actuating thrust from said piston and cylinder assembly to said clutch elements while permitting relative rotation therebetween, characterised in that:
a) said drive transmission is an automobile drive transmission having automatic control means to select transmission ratios of a gear train thereof in accordance with vehicle motion parameters;
b) Said clutch forms one of a series of clutches of said gear train of said automatic transmission, which clutches are operable in sequence in said control means to select said transmission ratios of said gear train, the drive input to said gear train being direct from an internal combustion engine and not through a torque converter or a fluid coupling, each of said clutches having its own one of said rotary bearing means for transmitting clutch-actuating thrust to its clutch elements; and
c) one of said clutches being arranged to effect drive take-up from rest;
whereby said automatic control means for said drive transmission can effect such control by means of a fluid pressure supply sufficient to actuate the non-rotating piston and cylinder assemblies of said clutches.

2 A drive transmission according to claim 1 characterised in that each of said clutches comprises two sets of interleaved rotatable annular clutch elements and said bearing means comprises an annular ball or roller race arranged between an annular piston forming the piston of said piston and cylinder assembly and an end one of said clutch elements.

3 A drive transmission according to claim 1 or claim 2 characterised in that said gear train comprises a multi-layshaft constant mesh change speed gear train and said clutch means are mounted coaxially with respect to one or more of the layshafts thereof to control transmission of drive through said layshafts.

4 A drive transmission according claim 1 or claim 2 characterised in that said gear train comprises a single layshaft constant mesh change speed gear train and said clutches provide for selective coupling of the gears of said train to a shaft thereof.

5 A drive transmission according to claim 2 characterised in that at least said clutch of said gear train for effecting drive take-up from rest comprises means for reducing stick-slip operating characteristics, said stick-slip reducing means comprising at least one floating element interleaved between a pair of clutch elements of said clutch, the floating element being mounted so as to be rotatable relative to both sets of clutch elements.

6 A drive transmission according to claim 5 characterised in that at least said clutch for drive take-up from rest comprises two sets of interleaved rotatable brake or clutch elements for frictional engagement, the sets having respective coupling means whereby relative rotation of the sets can be effected, and means for applying compression to the assembly of brake or clutch elements to change the torque transmission characteristics of the assembly, and said at least one floating element and said clutch elements operating in a liquid cooled environment, and said means for reducing stick-slip operating characteristics during said liquid-cooled drive take-up from rest comprising said floating element being in unbroken annular form and a friction material surface being provided on said floating element or on said brake or clutch element for engagement with the adjacent brake or clutch element or floating element respectively.

7 A drive transmission according to claim 6 characterised in that said floating element is surfaced with friction material and is of form similar to that of the adjacent clutch elements.

8 An automobile drive transmission according to claim 6 or claim 7 characterised in that said transmission incorporates automatic control means to control said ratio selection in accordance with vehicle motion parameters, whereby, in use, drive take-up from rest is direct from said engine and is effected by said clutch under said automatic control and through said floating element.

FIG.1

28A    26A

24B         24A

14

20A

FIG.2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 613 848 (REIFF)<br>* Whole document * | 1,2 | F 16 H 3/08<br>F 16 D 13/64<br>F 16 D 13/52<br>F 16 D 25/08 |
| A | US-A-4 159 654 (HATTORI)<br>* Whole document * | 1,4 | |
| D,A | EP-A-0 012 022 (WINDSOR-SMITH)<br>* Whole document * | 1,3 | |

**TECHNICAL FIELDS SEARCHED (Int. Cl.5)**

F 16 H 3/00
F 16 D

The present search report has been drawn up for all claims

| Place of search | Date of completion of the search | Examiner |
|---|---|---|
| THE HAGUE | 15-10-1990 | BALDWIN D.R. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)